# DEMANDE DE BREVET EUROPEEN

(11) **EP 0 979 955 A1**
(43) Date de publication de la demande: **16.02.2000**
(21) Numéro de dépôt: 99420174.7
(22) Date de dépôt: 26.07.1999
(51) Int. Cl.: F16B 45/02

(54) **Mousqueton à levier de verrouillage articulé sur le doigt de fermeture**

(30) Priorité: 13.08.1998 FR 9810493
(71) Demandeur: ETABLISSEMENTS LUDGER SIMOND, F-74400 Chamonix Mont Blanc (FR)
(72) Inventeur: Simond, Ludger, 74310 Les Houches (FR)
(74) Mandataire: Poncet, Jean-François

(57) **Abrégé**

Le mousqueton selon l'invention comprend un corps (1) fermé par un doigt pivotant (7) dont la rotation peut être interdite par un levier de verrouillage (15) transversal. Le levier de verrouillage (15) est articulé selon un axe de levier (16) sur le doigt pivotant (7) et comprend une encoche (17) venant en prise sur un ergot frontal (18) du corps (1) en position de verrouillage dans laquelle il est rappelé par un ressort (27). On assure ainsi un verrouillage fiable, à l'aide d'un levier de verrouillage (15) aisément manipulable.

## Description

La présente invention concerne les mousquetons à corps ouvert et doigt pivotant de fermeture, dans lesquels un verrouillage est assuré par un levier de verrouillage transversal venant en prise entre le doigt pivotant de fermeture et une portion opposée du corps de mousqueton pour interdire sélectivement le pivotement du doigt pivotant de fermeture dans le sens de l'ouverture.

De tels mousquetons à verrouillage automatique par levier de verrouillage transversal sont déjà connus notamment du document FR 2 439 330 A, du document FR 2 485 658 A et du document US 4 621 851 A.

Dans ces documents, le mousqueton comprend un corps de mousqueton ayant une ouverture fermée sélectivement par un doigt pivotant articulé à sa première extrémité selon un axe de rotation transversal, avec un levier transversal de verrouillage monté de façon à pouvoir pivoter autour d'un axe de levier entre une position de verrouillage vers laquelle il est rappelé par des moyens élastiques et dans laquelle il est engagé entre le doigt pivotant et une portion opposée du corps pour interdire la rotation du doigt pivotant, et une position déverrouillée dans laquelle il libère le doigt pivotant pour sa rotation d'ouverture. Dans les documents FR 2 439 330 A et FR 2 485 658 A, l'axe du levier de verrouillage est disposé dans ladite portion opposée du corps, et le levier de verrouillage vient s'engager sur le doigt pivotant par son extrémité libre. Dans le document US 4 621 851 A, l'axe du levier de verrouillage est à l'extrémité libre du doigt pivotant, et le levier de verrouillage s'engage par son extrémité libre contre la portion opposée du corps.

Dans les documents FR 2 485 658 A et US 4 621 851 A, le levier de verrouillage est généralement rectiligne, engagé entièrement entre la portion opposée du corps et le voisinage de l'extrémité libre du doigt pivotant. Il en résulte que le levier de verrouillage réduit la capacité d'ouverture du mousqueton, et constitue un élément qui est peu commode à actionner, nécessitant l'usage du pouce pour le solliciter perpendiculairement au mouvement d'ouverture du doigt pivotant. Ainsi, ce dispositif n'est pas adapté à un usage pour l'alpinisme ou pour des travaux en hauteur, dans lesquels les conditions de sécurité doivent être respectées sans nécessiter une intervention difficile et fastidieuse de l'utilisateur. En outre, rien n'interdit le pivotement du levier de verrouillage, qui risque ainsi d'être déverrouillé de façon intempestive.

Dans le document FR 2 439 330 A, le levier transversal de verrouillage est disposé plus à l'écart de l'extrémité libre du doigt pivotant, de sorte que les capacités d'ouverture sont améliorées. Egalement, le levier de verrouillage a une forme en L avec une branche longitudinale qui dépasse radialement au-delà de la portion opposée du corps, de sorte que le levier de verrouillage est mieux accessible pour sa manoeuvre. Cependant, le verrouillage n'est pas suffisamment fiable, car il est assuré par deux branches d'extrémité parallèles du levier de verrouillage qui sont des éléments relativement peu résistants, susceptibles d'être déformés et écartés au cours de l'utilisation. Egalement, l'opérateur doit prendre soin de solliciter préalablement le levier de verrouillage avant de solliciter à l'ouverture le doigt pivotant de fermeture, à défaut de quoi le pivotement du levier de verrouillage devient impossible. La manoeuvre est ainsi compliquée. En outre, le levier de verrouillage est exagérément dépassant à l'écart du corps, et constitue un élément protubérant qui risque de perturber l'utilisation et d'être sollicité de façon intempestive.

Dans ce document, une bague coulissante, montée sur la portion opposée du corps, peut venir bloquer le levier de verrouillage pour interdire son pivotement vers la position déverrouillée. L'inconvénient est alors qu'il est nécessaire de manoeuvrer à chaque fois la bague de blocage pour permettre ensuite la manoeuvre du levier de verrouillage assurant le déverrouillage.

On connaît également, du document JP 07 031 687 A, un mousqueton dans lequel un levier de verrouillage transversal généralement rectiligne, articulé à une première extrémité selon un axe de levier disposé en position intermédiaire sur le doigt pivotant, et venant coopérer par des fentes en L latérales de sa seconde extrémité avec des ergots latéraux d'appui opposés du corps de mousqueton. Un levier de manoeuvre, distinct du levier de verrouillage, est articulé sur la partie opposée du corps et sollicite latéralement l'extrémité libre du levier de verrouillage pour produire le déverrouillage par rotation du levier de verrouillage. La structure est plus complexe et onéreuse, et présente des risques accrus de coincement en cas d'insertion accidentelle de sable ou boue entre les nombreuses pièces en mouvement ou dans les fentes en L. Avec ce mousqueton également, l'opérateur doit prendre soin de solliciter préalablement le levier de manoeuvre avant de solliciter à l'ouverture le doigt pivotant de fermeture, à défaut de quoi le pivotement du levier de verrouillage devient impossible ou très difficile. La manoeuvre est ainsi compliquée. En outre, rien n'interdit le pivotement du levier de verrouillage, qui risque d'être déverrouillé de façon intempestive.

Le problème proposé par la présente invention est de concevoir une nouvelle structure de mousqueton à verrouillage automatique par levier transversal de verrouillage, qui assure à la fois un verrouillage fiable et efficace, une capacité d'ouverture maximale du mousqueton, et une grande facilité d'utilisation pour passer de la position fermée verrouillée à la position ouverte déverrouillée.

L'invention vise également à concevoir une telle structure de mousqueton qui soit particulièrement simple et peu onéreuse à fabriquer.

En option, la structure de mousqueton selon l'invention doit permettre d'assurer sélectivement un blocage ou un déblocage permanent du levier de verrouillage, permettant, au choix de l'utilisateur, d'assurer un simple verrouillage ou un double verrouillage.

Pour atteindre ces objets ainsi que d'autres, un mousqueton à verrouillage automatique selon l'invention comprend un corps de mousqueton ayant une ouverture fermée par un doigt pivotant articulé à sa première extrémité selon un axe de rotation transversal, avec un levier de verrouillage transversal ayant une première extrémité articulée autour d'un axe de levier disposé en position intermédiaire sur le doigt pivotant, le levier de verrouillage ayant une partie engageante conformée pour coopérer avec une zone d'appui correspondante dans une portion opposée du corps ; le levier de verrouillage peut pivoter entre une position de verrouillage vers laquelle il est rappelé par un ressort de verrouillage et dans laquelle il est engagé entre le doigt pivotant et la zone d'appui correspondante pour interdire la rotation du doigt pivotant, et une position déverrouillée dans laquelle la partie engageante échappe à la zone d'appui correspondante pour autoriser le pivotement d'ouverture du doigt pivotant ; le levier de verrouillage présente une forme générale en L, avec une branche transversale de verrouillage se développant entre l'axe de levier et la partie engageante de levier, et avec une branche longitudinale de manoeuvre dépassant radialement au-delà de la portion opposée du corps et se développant longitudinalement le long du corps depuis la partie engageante de levier.

La partie engageante du levier de verrouillage se trouve ainsi en position intermédiaire entre la branche longitudinale de manoeuvre et la branche transversale de verrouillage.

Selon un premier mode de réalisation, la partie engageante et la zone d'appui sont telles que, dans la rotation de déverrouillage, le levier de verrouillage pivote dans le sens opposé de la rotation d'ouverture du doigt pivotant.

Selon une variante, la partie engageante et la zone d'appui sont telles que, dans sa rotation de déverrouillage, le levier de verrouillage pivote dans le même sens que la rotation d'ouverture du doigt pivotant.

Pour faciliter la manoeuvre du levier de verrouillage, le doigt pivotant est sollicité vers sa position de fermeture par un ressort de rappel spécifique, distinct du ressort de verrouillage, et la raideur du ressort de verrouillage est choisie inférieure ou égale à une valeur limite selon laquelle des forces égales F2 et F1 appliquées respectivement sur le doigt pivotant et sur le levier de verrouillage produisent la rotation simultanée du doigt pivotant et du levier de verrouillage à l'encontre des ressorts respectifs.

D'autres objets, caractéristiques et avantages de la présente invention ressortiront de la description suivante de modes de réalisation particuliers, faite en relation avec les figures jointes, parmi lesquelles:
- la figure 1 est une vue de face d'un mousqueton selon un premier mode de réalisation de la présente invention, en position fermée et verrouillée, avec le levier de verrouillage à l'état bloqué ; - la figure 2 est une vue de dessus en coupe selon le plan A-A de la figure 1 ;
- la figure 3 est une vue de face du mousqueton de la figure 1, en position fermée et verrouillée avec le levier de verrouillage à l'état débloqué ;
- la figure 4 est une vue de face du mousqueton de la figure 1 en position fermée déverrouillée ;
- la figure 5 est une vue de face du mousqueton de la figure 1 en position ouverte ;
- la figure 6 est une vue de face d'un mousqueton selon un second mode de réalisation de la présente invention, en position fermée et verrouillée avec le levier de verrouillage à l'état bloqué ;
- la figure 7 est une vue de face du mousqueton de la figure 6 en position fermée et verrouillée avec le levier de verrouillage à l'état débloqué ;
- la figure 8 est une vue de face du mousqueton de la figure 6 en position fermée déverrouillée ; et
- la figure 9 est une vue de face du mousqueton de la figure 6 en position ouverte.

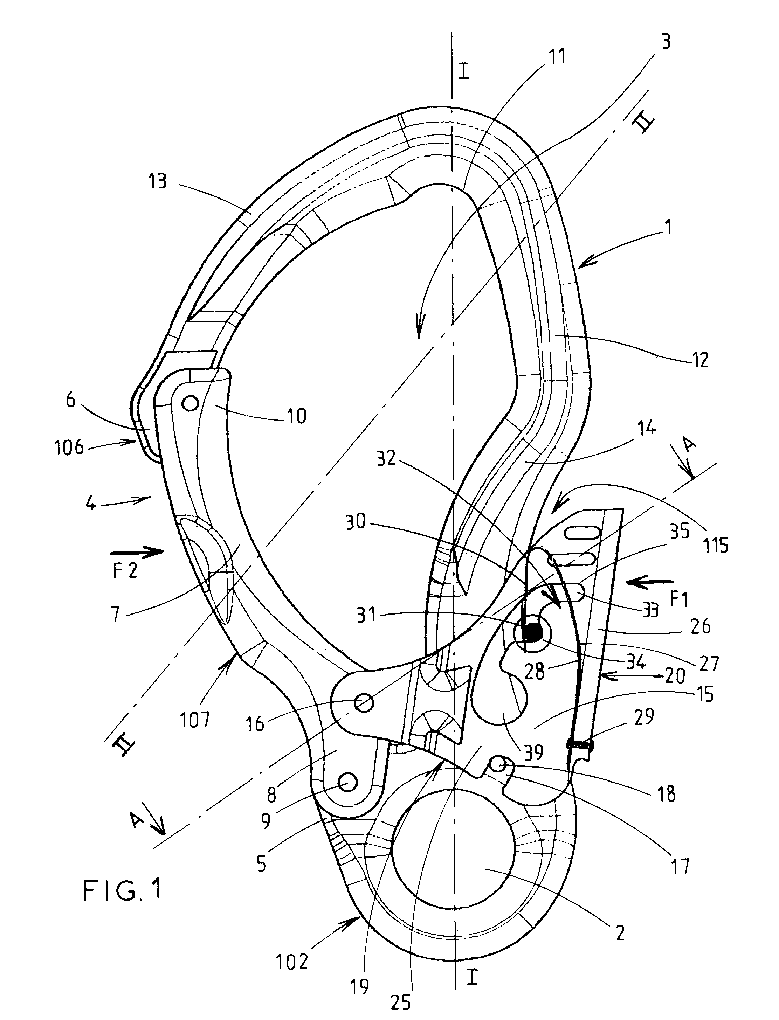

Dans les deux modes de réalisation illustrés sur les figures, un mousqueton à verrouillage automatique selon l'invention comprend un corps 1 de mousqueton ayant une première boucle fermée 2 et une seconde boucle ouvrante 3. La boucle ouvrante 3 comprend une ouverture 4, limitée par une première extrémité de corps 5 et par une seconde extrémité de corps 6. L'ouverture 4 est sélectivement fermée par un doigt pivotant 7 articulé à sa première extrémité 8 sur la première extrémité de corps 5 selon un axe de rotation transversal 9, et sollicité en rotation vers sa position fermée par un ressort de rappel non représenté sur les figures. En position fermée illustrée sur la figure 1, la seconde extrémité 10 du doigt pivotant 7 vient s'engager sur la seconde extrémité de corps 6.

Dans les modes de réalisation illustrés, le mousqueton présente une forme particulière et avantageuse. Ainsi, si l'on considère l'axe longitudinal I-I de mousqueton, reliant le centre de la première boucle fermée 2 et le sommet 11 de la seconde boucle ouvrante 3, on remarque que le corps 1 comprend une branche longitudinale 12 généralement parallèle à l'axe I-I et relativement proche de l'axe, alors que le doigt pivotant 7 et la seconde branche oblique 13 correspondante du corps 1 s'écartent de l'axe longitudinal I-I. Depuis le sommet 11, la seconde branche oblique 13 se développe en oblique jusqu'à la seconde extrémité de corps 6. A sa base, la branche longitudinale 12 du corps 1 comporte une portion oblique 14 qui se rapproche progressivement de l'axe longitudinal I-I, pour réaliser un évidement externe 115 dans la portion du corps 1 opposée au doigt pivotant 7.

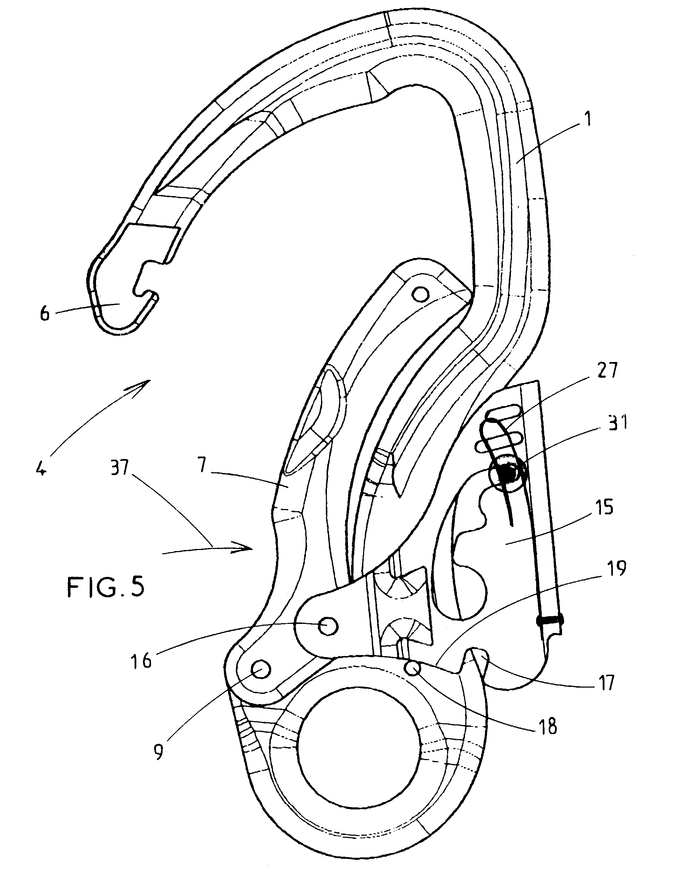

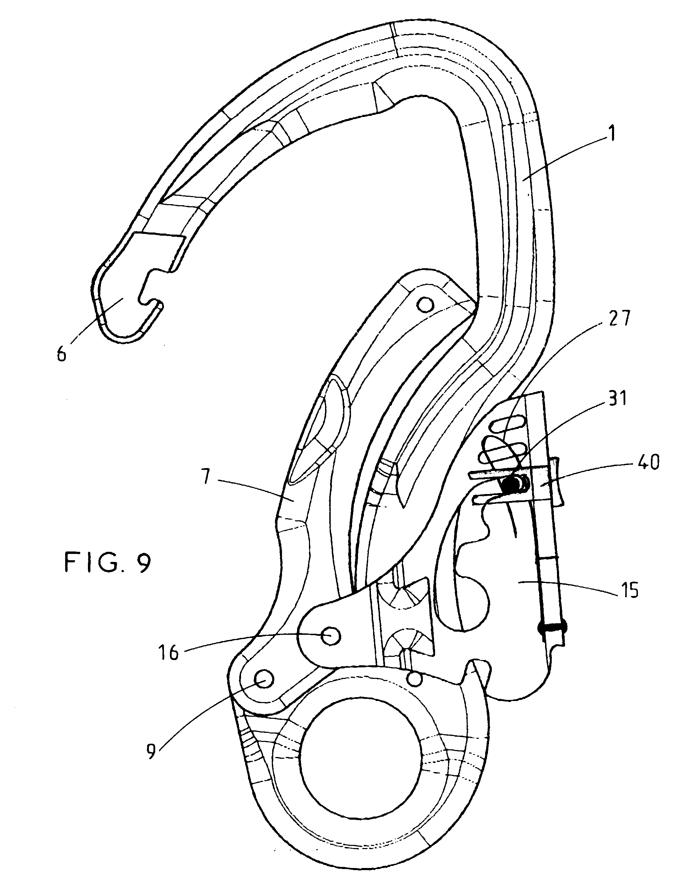

Par la présence de la seconde branche oblique 13 et de la position oblique 14 du corps 1, la seconde boucle ouvrante 3 se trouve allongée selon un axe oblique II-II, avec un fond de seconde boucle ouvrante 3 constitué par le sommet 11 et la branche longitudinale 12 de corps, le fond étant opposé à l'ouverture 4 fermée par le doigt pivotant 7. Lors de l'ouverture du doigt pivotant 7, comme illustré sur la figure 5 ou la figure 9, le doigt pivotant 7 vient en appui contre la portion oblique 14 du corps 1, et libère ainsi un grand espace de la seconde boucle ouvrante 3. Le mousqueton constitue alors un crochet largement ouvert qu'il est très facile d'engager sur un élément d'ancrage tel qu'une barre, un anneau, un câble, une corde.

La portion oblique 14 et le doigt pivotant 7 sont avantageusement incurvés comme illustré sur les figures. Toutefois, la portion radialement la plus externe 107 du doigt pivotant 7 reste en retrait de la ligne joignant les zones les plus proéminentes 106 et 102 du corps 1 de part et d'autre du doigt pivotant 7. De la sorte, le doigt pivotant 7 n'est pas sollicité en rotation lorsque le mousqueton est en appui sur un plan par ses deux zones proéminentes 106 et 102.

Le doigt pivotant 7 peut avantageusement comprendre, au voisinage de son extrémité articulée, un tronçon à courbure inversée à concavité tournée vers l'extérieur.

Le mousqueton selon l'invention comprend en outre un levier de verrouillage 15 transversal ayant une première extrémité articulée autour d'un axe de levier 16 disposé en position intermédiaire sur le doigt pivotant 7. Dans la réalisation avantageuse illustrée, l'axe de levier 16 est plus proche de la première extrémité 8 que de la seconde extrémité 10 du doigt pivotant 7, par exemple au voisinage du cinquième de la longueur du doigt pivotant 7 à partir de la première extrémité 8 du doigt pivotant 7.

La présence éventuelle d'un tronçon à courbure inversée du doigt pivotant, entre l'axe de rotation transversal 9 et l'axe de levier 16, permet de déporter avantageusement l'axe de levier 16 vers l'intérieur du mousqueton, en direction de la portion opposée du corps 1, réduisant la course et l'effort nécessaires pour le déverrouillage.

Le levier de verrouillage 15 comprend une partie engageante 17 coopérant avec une zone d'appui 18 correspondante prévue dans une portion du corps 1 opposée au doigt pivotant 7.

Dans le mode de réalisation illustré sur les figures, la partie engageante 17 comprend au moins une encoche ménagée dans une rampe externe constituée par le bord inférieur 19 du levier de verrouillage, et la zone d'appui 18 du corps 1 comprend au moins un ergot frontal dépassant du corps 1 parallèlement à l'axe de levier 16. Le bord inférieur 19 du levier de verrouillage 15 est généralement perpendiculaire à l'axe longitudinal I-I du mousqueton, tandis que l'encoche 17 constituant la partie engageante est généralement longitudinale, c'est-à-dire parallèle à l'axe longitudinal I-I. En position verrouillée illustrée sur la figure 1, l'ergot 18 frontal engagé dans l'encoche 17 interdit le déplacement du levier de verrouillage 15 vers la droite, et assure ainsi le verrouillage en s'opposant au pivotement du doigt pivotant 7 qui est maintenu en position fermée.

Ainsi, en position de verrouillage, la partie engageante 17 et la zone d'appui 18 correspondante du corps 1 s'opposent au déplacement transversal du levier de verrouillage 15 et du doigt pivotant 7.

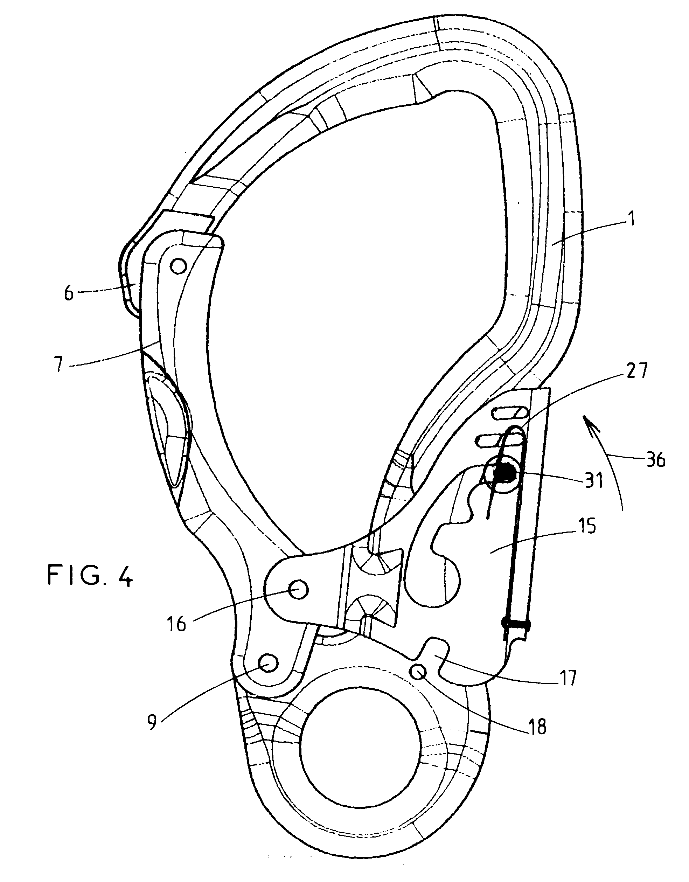

En position déverrouillée illustrée sur la figure 4, le levier de verrouillage 15 est pivoté, et la partie engageante 17 ou encoche échappe à la zone d'appui 18 ou ergot frontal du corps 1 pour autoriser le déplacement transversal du levier de verrouillage 15 et le pivotement d'ouverture du doigt pivotant 7.

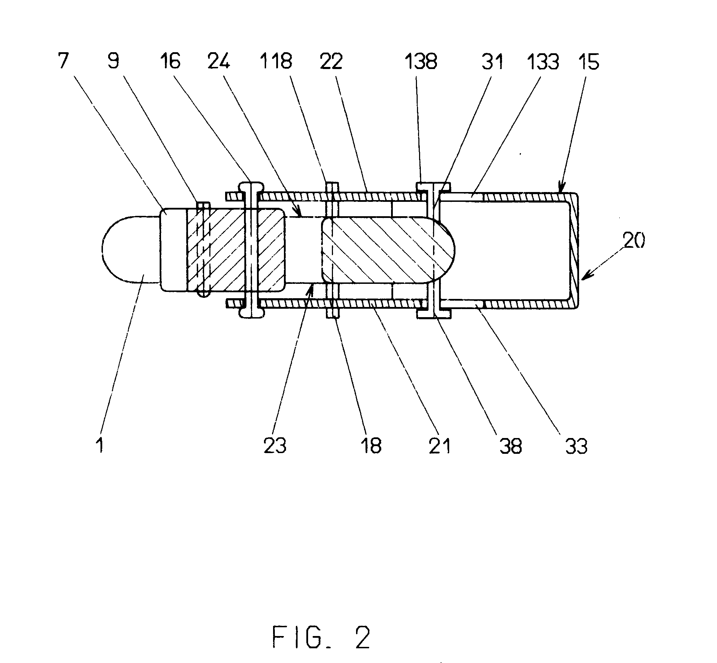

Comme on le voit sur la figure 2, le levier de verrouillage 15 selon ce mode de réalisation est une plaque repliée en U, formant deux branches parallèles respectives 21 et 22 reliées par une paroi d'appui 20. La branche 21 est disposée au regard de la face antérieure 23 du corps 1, tandis que la branche 22 est disposée en regard de la face postérieure 24 du corps 1. Les extrémités libres des branches 21 et 22 sont reliées par l'axe de levier 16 qui, tout en autorisant le pivotement du levier de verrouillage 15, s'oppose à tous risques d'écartement des branches 21 et 22.

Comme illustré sur le figure 1, en vue de face, le levier de verrouillage 15 a une forme générale en L, avec une branche transversale de verrouillage 25 se développant entre l'axe de levier 16 et la partie engageante 17, et avec une branche longitudinale de manoeuvre 26 sensiblement perpendiculaire à la branche transversale de verrouillage 25 et dépassant radialement au-delà de la portion opposée du corps 1 tout en restant de préférence engagée dans l'évidement externe 115 pour éviter d'être exagérément proéminente. La branche longitudinale de manoeuvre 26 se développe longitudinalement le long du corps 1 depuis la partie engageante 17 de levier, par exemple en direction du sommet 11 du corps 1 de mousqueton au-delà de la zone transversale de mousqueton située au niveau de l'axe de levier 16. Grâce à la branche longitudinale de manoeuvre 26, la paroi d'appui 20 est allongée, pour constituer un appui plus confortable pour l'utilisateur qui vient presser la paroi d'appui 20 pour faire pivoter le levier de verrouillage 15 entre la position verrouillée de la figure 1 et la position déverrouillée de la figure 4. Aussi, grâce à la position intermédiaire de la partie engageante 17, placée entre la branche transversale de verrouillage 25 et la branche longitudinale de manoeuvre 26, l'effort nécessaire pour produire le déverrouillage est sensiblement réduit.

Egalement, dans le mode de réalisation illustré, du fait de la position de la partie engageante 17 sous forme d'encoche dans le bord inférieur 19 du levier de verrouillage 15, lors de la rotation de déverrouillage, le levier de verrouillage 15 pivote dans le sens opposé de la rotation d'ouverture du doigt pivotant 7 : sur la figure 1, pour le déverrouillage, le levier de verrouillage 15 pivote dans le sens inverse des aiguilles d'une montre, tandis que pour l'ouverture, le doigt pivotant 7 pivote dans le sens des aiguilles d'une montre. Il en résulte que, pour produire le déverrouillage, l'utilisateur applique une force F1 sur la paroi d'appui 20 du levier de verrouillage 15, force dirigée radialement vers le centre du mousqueton. Simultanément ou peu après, l'utilisateur applique sur le doigt pivotant 7 une force F2 radialement vers le centre du mousqueton, force opposée à la force F1, pour amener le doigt pivotant 7 en position d'ouverture. Ainsi, le déverrouillage et l'ouverture du mousqueton deviennent très faciles, par une action de pression simultanée par l'utilisateur selon les forces F1 et F2.

En alternative, on pourrait prévoir une partie engageante 17 de forme différente, par exemple sous forme d'une lumière dans le levier de verrouillage 15, pour laquelle le déverrouillage impliquerait la rotation du levier de verrouillage 15 dans le sens des aiguilles d'une montre vers l'extérieur, le déverrouillage étant ainsi réalisé par une rotation du levier de verrouillage 15 dans le même sens de rotation que la rotation d'ouverture du doigt pivotant 7.

En se référant à nouveau à la figure 2, on voit que la zone d'appui du corps est en réalité réalisée par un premier ergot frontal 18, et par un second ergot postérieur correspondant 118. L'ergot frontal 18 coopère avec une encoche 17 telle qu'illustrée sur la figure 1, tandis que l'ergot postérieur 118 coopère avec une encoche similaire ménagée dans la seconde branche 22 du levier de verrouillage 15 non représentée sur la figure.

Comme on le voit également sur la figure 1, un ressort de verrouillage 27 est engagé entre le levier de verrouillage 15 et le corps 1 pour rappeler le levier de verrouillage 15 en position verrouillée dans laquelle l'encoche 17 est engagée en appui sur l'ergot frontal 18.

Dans la réalisation illustrée, le ressort de verrouillage 27 est une lame incurvée, avec une première branche 28 dont une première extrémité est fixée au levier de verrouillage 15 selon une zone de fixation 29 et dont une deuxième extrémité est en appui contre la face extérieure de la branche longitudinale 12 du corps 1 et est coudée pour se raccorder à une seconde branche 30 généralement parallèle à la première branche 28. Ainsi, la première branche 28 du ressort de verrouillage 27 est engagée fonctionnellement entre le corps 1 et le levier de verrouillage 15 pour repousser le levier de verrouillage 15 vers sa position verrouillée.

La raideur du ressort de verrouillage 27 est avantageusement choisie inférieure ou égale à une valeur limite selon laquelle des forces égales F2 et F1 appliquées respectivement sur le doigt pivotant 7 et sur le levier de verrouillage 15 produisent la rotation simultanée du doigt pivotant 7 et du levier de verrouillage 15 à l'encontre des ressorts respectifs. En d'autres termes, le couple de rappel exercé par le ressort de verrouillage 27 sur le levier de verrouillage 15 doit être inférieur ou égal au couple opposé exercé sur ce même levier de verrouillage 15 par la force F1 dont l'intensité est égale à celle de la force F2 produisant le début de rotation d'ouverture du doigt pivotant à l'encontre de son ressort de rappel.

Dans les modes de réalisation illustrés, le mousqueton comprend en outre un moyen de blocage pour bloquer sélectivement la rotation du levier de verrouillage 15 et interdire le déverrouillage.

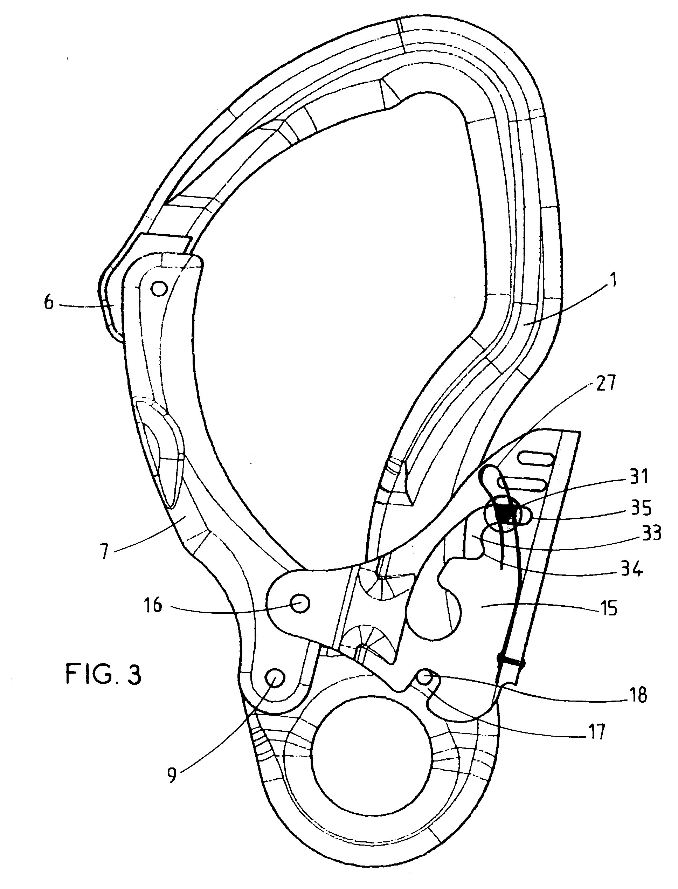

Sur les figures, le moyen de blocage est une butée mobile 31, montée sur le levier de verrouillage 15, et déplaçable sur des guides 32 entre une position de blocage, illustrée sur la figure 1, dans laquelle la butée mobile 31 vient en appui contre une portion du corps 1 pour s'opposer au pivotement du levier de verrouillage 15, et une position de déblocage illustrée sur la figure 3 dans laquelle la butée mobile 31 reste à l'écart de la portion du corps 1 pour autoriser le pivotement de déverrouillage du levier de verrouillage 15.

La butée mobile 31 est un axe antéropostérieur, monté à coulissement dans deux lumières latérales 33 et 133 (figure 2) formant les guides 32. Les lumières telles que la lumière latérale 33 comportent une première encoche peu profonde 34 dans laquelle est engagée la butée mobile 31 en position de blocage, et une seconde encoche plus profonde 35 dans laquelle peut s'engager la butée mobile 31 en position débloquée. Les encoches 34, 35 se développent selon une direction généralement radiale à l'écart du corps 1.

La seconde branche 30 du ressort 27 est engagée fonctionnellement entre le corps 1 et la butée mobile 31 pour repousser la butée mobile 31 à l'écart du corps 1, soit dans le fond de la première encoche 34 soit vers le fond de la seconde encoche 35.

Le fonctionnement du mousqueton va maintenant être expliqué en relation avec les figures 1 à 5.

En position fermée, verrouillée et bloquée illustrée sur la figure 1, la butée mobile 31 est engagée dans la première encoche 34 de la lumière latérale 33, dans laquelle elle est repoussée par le ressort 27. Dans cette première encoche 34, la butée mobile 31 se trouve à proximité immédiate de la face latérale du corps 1, interdisant la rotation du levier de verrouillage 15 dans le sens des aiguilles d'une montre.

Sur la figure 3, on a déplacé la butée mobile 31 dans la seconde encoche 35 de la lumière latérale 33. Dans ce cas, la butée mobile 31 est à l'écart du corps 1, et autorise la rotation du levier de verrouillage 15 dans le sens des aiguilles d'une montre. Le levier de verrouillage 15 reste toutefois en position verrouillée dans laquelle il est rappelé par le ressort 27, interdisant le pivotement du doigt pivotant 7.

Sur la figure 4, le mousqueton se trouve en position déverrouillée fermée : l'utilisateur a fait pivoter le levier de verrouillage 15 dans le sens du déverrouillage 36 autour de son axe de levier 16, à l'encontre de la sollicitation de rappel exercée par le ressort 27, dégageant l'encoche 17 à l'écart de l'ergot frontal 18. Le doigt pivotant 7 reste cependant en position fermée, dans laquelle il est rappelé par un ressort de rappel non représenté sur les figures.

Sur la figure 5, l'utilisateur a sollicité le doigt pivotant 7 dans le sens illustré par la flèche 37 autour de son axe de rotation transversal 9, pour l'amener en position ouverte, libérant l'ouverture 4. Dans ce mouvement, l'ergot frontal 18 peut glisser sur la rampe constituée par le bord inférieur 19 du levier de verrouillage 15.

Dans le mode de réalisation illustré sur les figures 1 à 5, mieux visible sur la figure 2, la butée mobile 31 est un axe antéropostérieur avec deux têtes d'extrémité 38 et 138 plus larges que la portion de lumière latérale 33 comportant les encoches 34 et 35. Une portion d'extrémité 39 de la lumière latérale 33 est élargie pour permettre le passage des têtes d'extrémité 38 et 138 pour le montage. Les têtes d'extrémité 38 et 138 constituent l'organe de manoeuvre permettant à l'utilisateur de déplacer la butée mobile 31 entre la position de blocage et la position de déblocage.

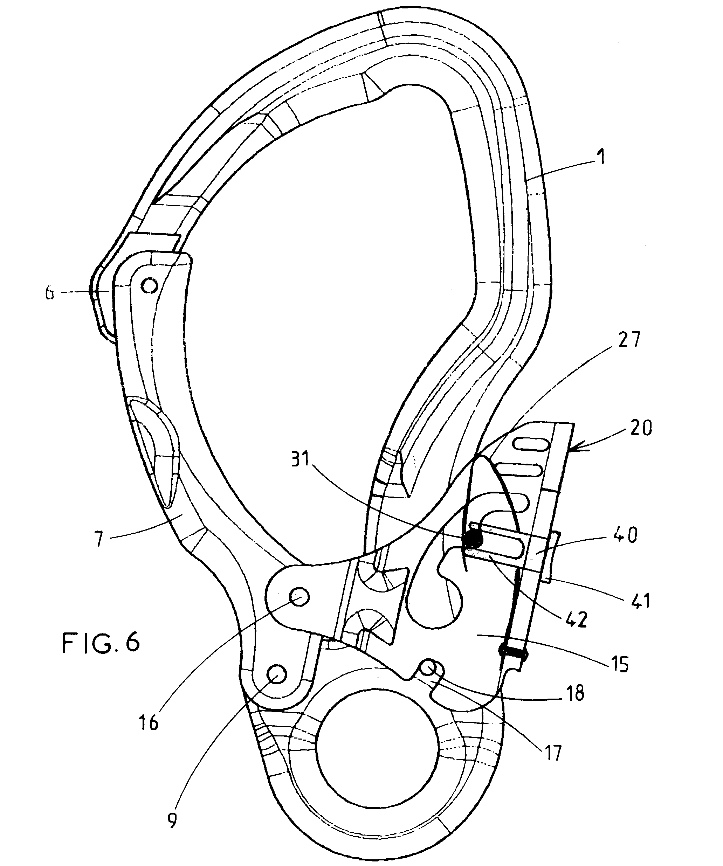

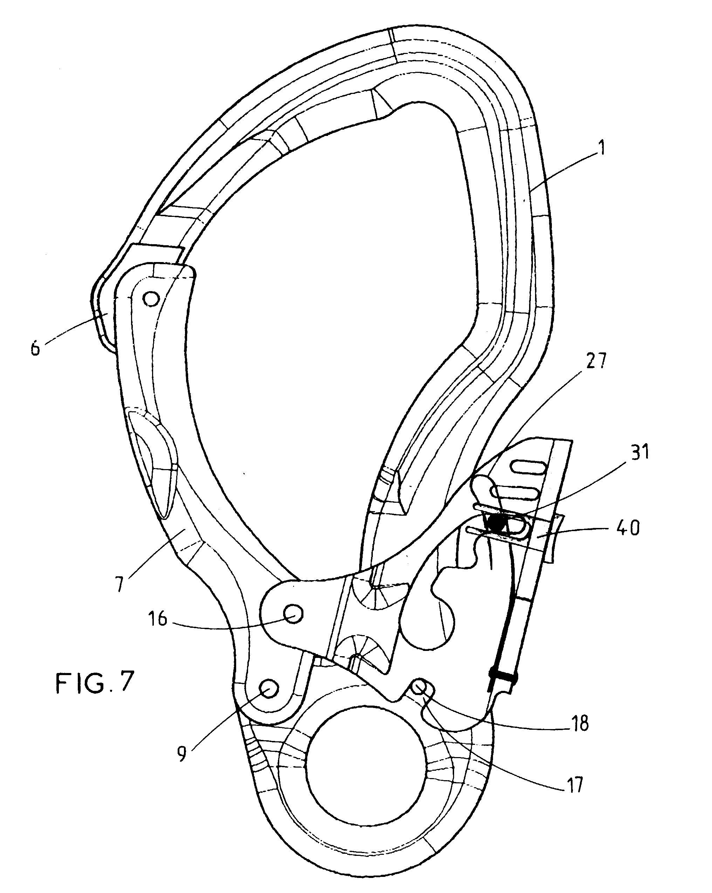

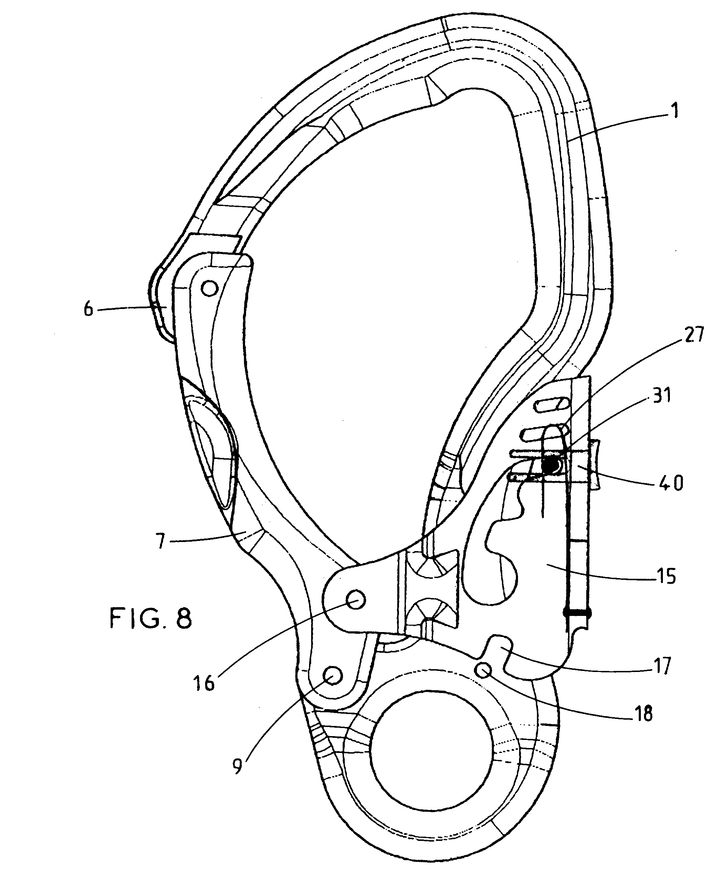

Dans le mode de réalisation illustré sur les figures 6 à 9, le déplacement de la butée mobile 31 entre la position de blocage illustrée sur la figure 6 et la position de déblocage illustrée sur les figures 7 à 9 est assuré par un coulisseau 40, comportant une tête 41 dépassanc à l'extérieur de la paroi d'appui 20 du levier de verrouillage 15, et comportant une fourche 42 engagée de part et d'autre de l'axe antéropostérieur formant la butée mobile 31. Le coulisseau 40 coulisse longitudinalement dans une lumière longitudinale ménagée dans la paroi d'appui 20 du levier de verrouillage 15, entre la position de blocage illustrée sur la figure 6 et la position de déblocage illustrée sur les figures 7 à 9.

Pour le reste, le mousqueton des figures 6 à 9 comprend les mêmes éléments que celui des figures 1 à 5, et le fonctionnement est identique comme illustré sur les figures.

La présente invention n'est pas limitée aux modes de réalisation qui ont été explicitement décrits, mais elle en inclut les diverses variantes et généralisations contenues dans le domaine des revendications ci-après.

## Revendications

1. Mousqueton à verrouillage automatique, comprenant un corps (1) de mousqueton ayant une ouverture (4) fermée par un doigt pivotant (7) articulé à sa première extrémité (8) selon un axe de rotation transversal (9), avec un levier de verrouillage (15) transversal ayant une première extrémité articulée autour d'un axe de levier (16) disposé en position intermédiaire sur le doigt pivotant (7), le levier de verrouillage (15) ayant une partie engageante (17) conformée pour coopérer avec une zone d'appui (18) correspondante dans une portion opposée du corps (1), le levier de verrouillage (15) pouvant pivoter entre une position de verrouillage vers laquelle il est rappelé par un ressort de verrouillage (27) et dans laquelle il est engagé entre le doigt pivotant (7) et la zone d'appui (18) correspondante pour interdire la rotation du doigt pivotant (7), et une position déverrouillée dans laquelle la partie engageante (17) échappe à la zone d'appui (18) correspondante pour autoriser le pivotement d'ouverture du doigt pivotant (7), caractérisé en ce que le levier de verrouillage (15) présente une forme générale en L, avec une branche transversale de verrouillage (25) se développant entre l'axe de levier (16) et la partie engageante (17) de levier, et avec une branche longitudinale de manoeuvre (26) dépassant radialement au-delà de la portion opposée du corps (1) et se développant longitudinalement le long du corps (1) depuis la partie engageante (17) de levier.

2. Mousqueton selon la revendication 1, caractérisé en ce que la partie engageante (17) et la zone d'appui (18) sont telles que, dans la rotation de déverrouillage, le levier de verrouillage (15) pivote dans le sens opposé de la rotation d'ouverture du doigt pivotant (7).

3. Mousqueton selon la revendication 1, caractérisé en ce que la partie engageante (17) et la zone d'appui (18) sont telles que, dans sa rotation de déverrouillage, le levier de verrouillage (15) pivote dans le même sens que la rotation d'ouverture du doigt pivotant (7).

4. Mousqueton selon l'une quelconque des revendications 1 à 3, caractérisé en ce que la zone d'appui (18) du corps (1) de mousqueton comprend au moins un ergot dépassant du corps (1), et la partie engageante (17) de levier de verrouillage (15) comprend au moins une encoche (17) longitudinale dans une rampe (19), l'ergot (18) dépassant venant s'engager dans l'encoche (17) longitudinale pour assurer le verrouillage.

5. Mousqueton selon l'une quelconque des revendications 1 à 4, caractérisé en ce que le doigt pivotant (7) est sollicité vers sa position de fermeture par un ressort de rappel spécifique, et en ce que la raideur du ressort de verrouillage (27) est choisie inférieure ou égale à une valeur limite selon laquelle des forces égales F2 et F1 appliquées respectivement sur le doigt pivotant (7) et sur le levier de verrouillage (15) produisent la rotation simultanée du doigt pivotant (7) et du levier de verrouillage (15).

6. Mousqueton selon l'une quelconque des revendications 1 à 5, caractérisé en ce que le doigt pivotant (7) comprend, entre l'axe de rotation transversal (9) et l'axe de levier (16), un tronçon à courbure inversée déportant l'axe de levier (16) vers l'intérieur du mousqueton.

7. Mousqueton selon l'une quelconque des revendications 1 à 6, caractérisé en ce qu'il comprend en outre un moyen de blocage (31) pour bloquer sélectivement la rotation du levier de verrouillage (15) et interdire le déverrouillage.

8. Mousqueton selon la revendication 7, caractérisé en ce que le moyen de blocage est une butée mobile (31), montée sur le levier de verrouillage (15), et déplaçable sur des guides (32) entre une position de blocage dans laquelle la butée mobile (31) vient en appui contre une portion du corps (1) pour s'opposer au pivotement du levier de verrouillage (15), et une position de déblocage dans laquelle la butée mobile (31) reste à l'écart de la portion du corps (1) pour autoriser le pivotement de déverrouillage du levier de verrouillage (15).

9. Mousqueton selon l'une quelconque des revendications 1 à 8, caractérisé en ce qu'il comprend un évidement externe (115) dans la portion du corps (1) opposée au doigt pivotant (7), et en ce que la branche longitudinale de manoeuvre (26) du levier de verrouillage (15) reste engagée dans l'évidement externe (115) du corps (1).

10. Mousqueton selon l'une quelconque des revendications 1 à 9, caractérisé en ce que le levier de verrouillage (15) est une plaque repliée en U formant deux branches parallèles (21, 22) reliées par une paroi d'appui (20) et dont les extrémités libres sont reliées par l'axe de levier (16).
